(19) Europäisches Patentamt
European Patent Office
Office européen des brevets

(11) Veröffentlichungsnummer: **0 252 237 B1**

# (12) EUROPÄISCHE PATENTSCHRIFT

(45) Veröffentlichungstag der Patentschrift: **03.07.91**

(51) Int. Cl.5: **A01N 57/20**, //(A01N57/20, 47:36,43:50)

(21) Anmeldenummer: **87106521.5**

(22) Anmeldetag: **06.05.87**

Teilanmeldung 90117740.2 eingereicht am 06/05/87.

## (54) Herbizide Mittel.

(30) Priorität: **09.05.86 DE 3615711**

(43) Veröffentlichungstag der Anmeldung:
**13.01.88 Patentblatt 88/02**

(45) Bekanntmachung des Hinweises auf die Patenterteilung:
**03.07.91 Patentblatt 91/27**

(84) Benannte Vertragsstaaten:
**AT BE CH DE ES FR GB GR IT LI LU NL SE**

(56) Entgegenhaltungen:
**EP-A- 0 009 620**
**EP-A- 0 030 424**
**EP-A- 0 162 326**

**CHEMICAL PATENTS INDEX, BASIC ABSTRACTS JOURNAL, Section C, Woche 8517, 19 Juni 1985, Ref. NR. 102723 Dersent Publ. Ltd. London, GB; &JP-A-60048905 (NISSAN CHEM. IND.K.K.) 16-03-1985**

**CHEMICAL PATENTS INDEX; BASIC ABSTRACTS JOURNAL, section C, Woche 8645, 7 Januar 1987, Ref. Nr. 295717 Derwent Publ. Ltd., London, GB; & JP-A-61 218 503 (NISSAN CHEM. IND. K.K.) 29-09-1986**

(73) Patentinhaber: **HOECHST AKTIENGESELLSCHAFT**
**Postfach 80 03 20**
**W-6230 Frankfurt am Main 80(DE)**

(72) Erfinder: **Mildenberger, Hilmar, Dr.**
**Fasanenstrasse 24**
**W-6233 Kelkheim (Taunus)(DE)**
Erfinder: **Bauer, Klaus, Dr.**
**Doorner Strasse 53 D**
**W-6450 Hanau(DE)**
Erfinder: **Bieringer, Hermann, Dr.**
**Eichenweg 26**
**W-6239 Eppstein-Taunus(DE)**
Erfinder: **Willms, Lothar, Dr.**
**Schulstrasse 3**
**W-5416 Hillscheid(DE)**
Erfinder: **Langelüddeke, Peter, Dr.**
**Nelkenweg 5**
**W-6238 Hofheim am Taunus(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 252 237 B1**

## Beschreibung

Gegenstand der vorliegenden Erfindung sind herbizide Mittel, dadurch gekennzeichnet, daß sie einen Wirkstoff der Formel I,

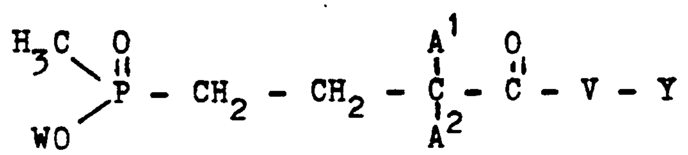

(I)

worin

$A_1$ = H und $A^2$ = $NH_2$ oder $A^1$, $A^2$ zusammen ein Sauerstoffatom

V = O oder NH,

Y = im Falle V = O:Wasserstoff oder ($C_1$-$C_4$) Alkyl oder

Y = im Falle V = NH:einen Rest der Formeln $-CH(CH_3)-CONH-CH(CH_3)-COOH$ oder $-CH(CH_3)-CONH-CH[CH_2CH(CH_3)_2]-COOH$ bedeutet, und unabhängig von der Bedeutung von V,

W = Wasserstoff bedeutet,

oder dessen Salz,

in Kombination mit einer Verbindung der Formel II,

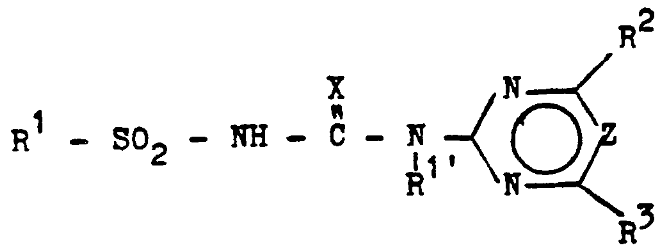

(II)

worin

$R^1$ = ($C_1$-$C_4$) Alkyl, ($C_2$-$C_6$) Alkenyl, ($C_2$-$C_6$) Alkinyl, die halogeniert sein können, ($C_1$-$C_4$) Alkylamino, Di ($C_1$-$C_4$-alkyl)amino, [N-($C_1$-$C_4$-Alkylsulfonyl)-N-($C_1$-$C_4$-alkyl)]amino, wobei die Alkylreste halogeniert sein können,
Phenyl, Benzyl, Phenoxy oder Thienyl, die alle durch ($C_1$-$c_4$)Alkyl, ($C_2$-$C_6$)Alkenyl, ($C_2$-$C_6$)Alkinyl oder ($c_1$-$c_4$)Alkoxy, die alle durch Halogen oder ($C_1$-$C_4$-Alkoxy)carbonyl substituiert sein können, ferner durch Halogen, $CF_3$, Nitro, einen Rest der Formel $-COOR^4$, worin
$R^4$ = H, ($C_1$-$C_4$)Alkyl, ($C_2$-$C_6$)Alkenyl, ($C_2$-$C_6$) Alkinyl, ($C_1$-$C_4$)-Alkoxy-($C_1$-$C_4$)alkyl oder Halogen ($C_1$-$C_4$)alkyl bedeutet,
ferner durch einen Rest der Formel $-S(O)_nR^5$, worin
$R^5$ = ($C_1$-$C_4$)Alkyl, ($C_1$-$C_4$)Alkoxy, Halogen-($C_1$-$C_4$)alkyl, ($C_1$-$C_4$) Alkoxy($C_1$-$C_4$)alkyl, ($C_1$-$C_4$) Alkoxy-carbonyl($C_1$-$C_4$)alkyl, Di($C_1$-$C_4$-alkyl)-amino, ($C_1$-$C_4$) Alkylamino, ($C_1$-$C_4$)Alkoxy-($C_1$-$C_4$)alkylamino und n = 0,1 oder 2 bedeutet,
substituiert sein können, oder
Pyrazolyl, das durch ($C_1$-$C_4$)Alkyl, ($C_2$-$C_6$)Alkoxyl, ($C_2$-$C_6$) Alkinyl oder ($C_1$-$C_4$)Alkoxy, die alle durch Halogen oder ($C_1$-$C_4$-Alkoxy)carbonyl substituiert sein können, ferner durch Halogen, $CF_3$, Nitro, einen Rest der Formel $-S(O)_nR^5$, worin $R^5$ die genannte Bedeutung hat, substituiert sein kann,

$R^{1'}$ = H, ($C_1$-$C_4$)Alkyl oder ($C_2$-$C_4$)Alkenyl,

$R^2$, $R^3$ = unabhängig von einander ($C_1$-$C_4$)Alkyl, ($C_1$-$C_4$)Alkoxy, die beide gegebenenfalls ein- oder mehrfach durch Halogen, ($C_1$-$C_4$) Alkoxy, ($C_1$-$C_4$-Alkoxy)carbonyl substituiert sind, ($C_2$-$C_6$)-Alkenyl, ($C_2$-$C_6$)Alkinyl, ($C_2$-$C_6$)Alkenyloxy, ($C_2$-$C_6$)Alkinyloxy oder Halogen.

X = O, S oder $NR^6$ mit $R^6$ = ($C_1$-$C_4$)Alkyl oder ($C_1$-$C_4$)Alkoxy und

Z = CH oder N bedeuten, oder deren Salz, enthalten.

Aus JP-A-60048905 und JP-A-61218503 sind bereits synergistische Mischungen aus Glufosinate-ammonium (d. h. 2-Amino-4-(hydroxy-methyl-phosphinyl)-butansäure-ammoniumsalz), Bialaphos (d. h. 2-Amino-4-(hydroxy-methyl-phosphinyl)-butanoylalanylalanin) oder N-Phosphonomethylglycin in Kombination mit substituierten 1-[(4-Alkoxycarbonyl-pyrazolyl) -sulfonyl]-3-pyrimidinylharnstoffen oder -triazinylharnstoffen bekannt.

Die Verbindungen der Formel I mit V = O sind in US-PS 4,168,963 und EP-PS 30424 beschrieben, während die Verbindungen der Formel I mit V = NH aus US-PS 4,309,208, S. Omura et al., The Japanese Journal of Antibiotics, Band XXXVIII-2, S. 542 (1985); H.S. Seto et al., The Journal of Antibiotics, Vol. XXXVI-1, S 96 - 98 (1983) bekannt sind. Bevorzugt unter den Verbindungen der Formel I sind die Verbindungen

Ia: $A^1$ = H, $A^2$ = $NH_2$; V - Y = OH, W = H und deren Salze; Monoammoniumsalz; common name: Glufosinate-Ammonium.

Ib: $A^1$, $A^2$ = zusammen Sauerstoff; V - Y = OH, W = H und deren Salze.

Ic: $A^1$ = H, $A^2$ = $NH_2$; V = NH; Y = - $CH(CH_3)$-CONH-$CH(CH_3)COOH$ W = H und deren Salze; common name: Bialaphos.

Id: $A^1$ = H, $A^2$ = $NH_2$; V = NH; Y = -$CH(CH_3)$-CONH-$CH(CH_2CH$-$(CH_3)_2)COOH$, W = H und deren Salze; common name: Phosalacine (S. Omura et al. The Japanese Journal of Antibiotics, 37 (2), S. 542 (1985).

Bevorzugt unter den Verbindungen von Formel II sind:

Typ 1 : Alkylaminosulfonylharnstoffe der obengenannten Formel II, worin
$R^1$
= [N-($C_1$-$C_4$-Alkylsulfonyl)-N-($C_1$-$C_4$-alkyl)amino], wobei die Alkylreste jeweils halogeniert sein können, und X = O bedeuten, s. EP-A 131 258; insbesondere von Bedeutung ist hiervon die Verbindung IIa, worin $R^1$ = $(CH_3SO_2)(CH_3)N$-, $R^2$, $R^3$ = $OCH_3$ und Z = CH bedeuten.

Typ 2: Pyrazolylsulfonylharnstoffe der obengenannten Formel II, worin $R^1$ = einen Rest der Formel

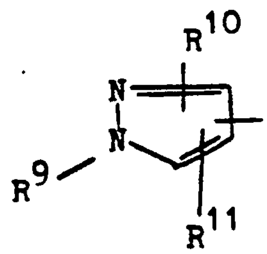
,

worin
$R^9$
= H oder ($C_1$–$C_4$)Alkyl,
$R^{10}$
= H, ($C_1$-$C_4$) Alkyl, ($C_1$-$C_4$) Alkoxy oder -$S(O)_nR^{5'}$, worin $R^{5'}$ = ($C_1$-$C_4$) Alkyl, ($C_1$-$C_4$) Alkoxy, Halogen-($C_1$-$C_4$)alkyl, ($C_1$-$C_4$) Alkylamino oder Di($C_1$-$C_4$-alkyl)amino und
$R^{11}$
= H, Halogen, ($C_1$-$C_4$) Alkyl oder ($C_1$-$C_4$) Alkoxy, die beide halogeniert sein können und X = O bedeuten, s. EP-A 87 780.

Von diesen Verbindungen sind erfindungsgemäß insbesondere geeignet
Verbindung
IIb:
$R^{1'}$ = H, $R^1$ = 1,3,5-Trimethyl-pyrazol-4-yl, X = 0, $R^2$ = $CH_3$, $R^3$ = $OCH_3$ und Z = N.
IIc:
$R^{1'}$ = H, $R^1$ = 1,3,5-Trimethyl-pyrazol-4-yl, X = O, $R^2$ = $CH_3$, $R^3$ = $OCH_3$ und Z = CH.
IId:
$R^{1'}$ = H, $R^1$ = 1,3,5-Trimethyl-pyrazol-4-yl, X = O, $R^2$ = $R^3$ = $CH_3$ und Z = CH.
IIe:
$R^{1'}$ = H, $R^1$ = 5-Chloro-1,3-dimethyl-pyrazol-4-yl, X = O, $R^2$ = $CH_3$, $R^3$ = $OCH_3$ und Z = N.
IIf:
$R^{1'}$ = H, $R^1$ = 5-Chloro-1,3-dimethyl-pyrazol-4-yl, X = O, $R^2$ = $CH_3$, $R^3$ = $OCH_3$ und Z = CH.

IIg:
$R^{1'}$ = H, $R^1$ = 5-chloro-1,3-dimethyl-pyrazol-4-yl, X = O, $R^2$ = $R^3$ = $CH_3$ und z = CH.
IIh:
$R^{1'}$ = H, $R^1$ = 1,5-dimethyl-pyrazol-4-yl, X = O, $R^2$ = $R^3$ = $OCH_3$ und Z = CH.
IIi:
$R^{1'}$ = H, $R^1$ = 1,3-Dimethyl-5-difluoromethoxy-pyrazol-4-yl, X = O, $R^2$ = $CH_3$, $R^3$ = $OCH_3$ und Z = H

Typ 3: Thienylsulfonylharnstoffe der obengenannten Formel II, worin
$R^1$ = einen Rest der Formel

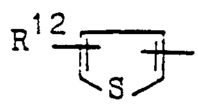
,

worin
$R^{12}$ = H, Halogen, ($C_1$-$C_4$) Alkyl ($C_2$-$C_4$) Alkenyl oder ($C_1$-$C_4$) Alkoxy, wobei alle drei letztgenannten Reste halogeniert sein können, einen Rest der Formel -$COOR^{4'}$ mit $R^{4'}$ = H, ($C_1$-$C_4$) Alkyl oder($C_2$-$C_6$) Alkenyl, oder einen Rest der Formel -$S(O)_n$-$R^{5'}$ und X = O bedeuten, s. US-PS 4,431,029. JP-A 60 197 676, JP-A 60 139 691, JP-A 60 193 983.
Beispielsweise seien von diesen Verbindungen genannt die Verbindungen
IIm : $R^1$ = 2-Methoxycarbonyl-3-thienyl, $R^{1'}$ = H, X = O, $R^2$ = $OCH_3$ , $R^3$ = $CH_3$ und Z = N (Thiameturonmethyl)
IIn:
$R^1$ = 3-(Pentafluor-1-propenyl)-2-thienyl, $R^{1'}$ = H, X = O, $R^2$, $R^3$ = $OCH_3$, Z = N oder CH
IIo:
$R^1$ = 3-(2-Chlor-1,2-difluorethenyl)-2-thienyl, $R^{1'}$ = H, X = O, $R^2$, $R^3$ = $OCH_3$, Z = N oder CH
IIp:
$R^1$ = 3-(2-Chlor-1,2-difluorethenyl)-2-thienyl, $R^{1'}$ = H, X = O, $R^2$ = $CH_3$, $R^3$ = $OCH_3$, Z = N oder CH
IIq:
$R^1$ = 3-(Pentafluor-1-propenyl)-2-thienyl, $R^{1'}$ = H, X = O, $R^2$ = $CH_3$, $R^3$ = $OCH_3$, Z = N oder CH.

Typ 4: Phenyl- Phenoxy- und Benzylsulfonylharnstoffe der Formel II, worin
$R^1$
= Phenyl, Phenoxy oder Benzyl, die beide durch Halogen, ($C_1$-$C_4$) Alkyl oder ($C_1$-$C_4$) Alkoxy, die beide halogeniert sein können, einen Rest der Formeln -$COOR^4$ oder -$S(O)_nR^{5'}$ substituiert sein können und
X = O bedeuten, s. EP-A 51 466, EP-A 113 956, EP-A 7687, US-PS 4,514,212.
Hierunter seien beispielsweise genannt die Verbindungen
IIs:
$R^{1'}$ = H,$R^1$ = 2-Ethoxycarbonyl-phenyl, X = O $R^2$ = Cl, $R^3$ = $OCH_3$ und Z = CH
IIt:
$R^{1'}$ = H, $R^1$ = 2-Methoxycarbonyl-phenylmethyl, X = O, $R^2$ = $R^3$ = $OCH_3$ und Z = CH.
IIu:
$R^{1'}$ = H, $R^1$ = 2-Methoxycarbonyl-phenyl, X = O, $R^2$, $R^3$ = $CH_3$ und Z = CH; common name: Sulfometuron-methyl
IIv:
$R^{1'}$ = $CH_3$, $R^1$ = 2-Methoxycarbonyl-phenyl, X = O, $R^2$ = $CH_3$, $R^3$ = $OCH_3$ und Z = N
IIw:
$R^{1'}$ = H, $R^1$ = 2-Methoxycarbonyl-phenyl, X=O, $R^2$ = $CH_3$, = $OCH_3$ und Z = N (Metsulfuron-methyl)
IIx:
$R^{1'}$ = H, $R^1$ = 2-(2-Chlorethoxy)-phenyl, X = O, $R^2$ = $CH_3$, $R^3$ = $OCH_3$ und Z = N
IIy:
$R^{1'}$ = H, $R^1$ = 2-Chlorphenyl, X = O, $R^2$ = $CH_3$, $R^3$ = $OCH_3$ und Z = N (Chlorsulfuron)

Die erfindungsgemäßen Kombinationen erfassen auch die für die Landwirtschaft einsetzbaren Salze der Verbindungen der Formeln I und II.

Als solche kommen beispielsweise die üblichen Alkali-, Erdalkali-, substituierten oder unsubstituierten Ammonium-, Phosphonium- oder Sulfoniumsalze in Betracht. Unter den Erdalkali- und Alkalisalzen sind in erster Linie die Na-, K-, Mg- oder Ca-Salze zu nennen.

Ferner könen die Verbindungen der Formel I auch Säureadditionssalze mit anorganischen Säuren wie HCl, HBr, $H_2SO_4$ oder $H_3PO_4$ oder mit organischen Säuren wie ($C_1$-$C_4$)-Carbonsäuren, chlorierten Essigsäuren, Weinsäure oder Zitronensäure bilden; diese werden ebenfalls von der Erfindung umfaßt.

Ferner umfaßt Formel I auch alle entsprechenden Stereoisomeren und deren Gemische, so daß diese ebenfalls unter die erfindungsgemäßen Kombinationen fallen.

Die genannten herbiziden Wirkstoffkombinationen zeigen eine überraschend hohe Wirksamkeit, die größer ist, als aufgrund der Wirkungen der Einzelkomponenten erwartet werden konnte.

Die erfindungsgemäßen Wirkstoffkombinationen erfassen ein breites Unkrautspektrum. Sie eignen sich beispielsweise zur Bekämpfung von annuellen und perennierenden Unkräutern wie beispielsweise Agropyron, Paspalum, Cynodon, Imperata, Pennisetum, Convolvulus, Cirsium, Rumex und andere.

Die erfindungsgemäßen Kombinationen lassen sich zur selektiven Bekämpfung von Schadpflanzen in Plantagenkulturen wie Ölpalme, Kokospalme, Gummibaum, Zitrus, Ananas, Baumwolle, Kaffee, Kakao u.a. sowie im Obst- und Weinbau einsetzen. Ebenso können die erfindungsgemäßen Kombinationen im Ackerbau im sogenannten "no till" bzw. "zero till"-Verfahren eingesetzt werden. Sie können aber auch nichtselektiv auf Wegen, Plätzen, Industrieanlagen etc. angewendet werden, um diese Flächen von unerwünschtem Pflanzenwuchs freizuhalten.

Die Mischungsverhältnisse der Verbindungen der Formel I zu den Verbindungen der Formeln II können innerhalb weiter Grenzen insbesondere zwischen etwa 500:1 bis 1:10 schwanken. Die Wahl des Mischungsverhältnisses ist abhängig von verschiedenen Parametern wie der Art der Mischungspartner, Entwicklungsstadium der Unkräuter und Unkrautspektrum. Vorzugsweise werden Mischungsverhältnisse von 100:1 bis 1:5 gewählt.

Die erfindungsgemäßen Kombinationen können sowohl in Form von Mischformulierungen - benetzbare Pulver, Emulsionskonzentrate - vorliegen, die dann in üblicher Weise mit Wasser verdünnt zur Anwendung gebracht werden; sie können aber auch als sogenannte Tankmischungen durch gemeinsame Verdünnung der getrennt formulierten Komponenten mit Wasser hergestellt werden.

Die Aufwandmengen des Herbizids der Formel I in den Wirkstoffmischungen variieren im allgemeinen zwischen 0,25 und 4,0 kg/ha, während die Aufwandmengen der Verbindungen der Formeln II im Bereich zwischen 0.01 und 5,0 kg/ha liegen können, speziell für

| | | | |
|---|---|---|---|
| Verbindungen der Formel II | | zwischen | 0,01 und 2,0 kg a.i./ha |
| " | Typ 1 | " | 0,01 und 1,0 kg a.i./ha |
| " | Typ 2 | " | 0,01 und 0,5 kg a.i./ha |
| " | Typ 3 | " | 0,01 und 0,5 kg a.i./ha |
| " | Typ 4 | " | 0,05 und 2,0 kg a.i./ha |

Die erfindungsgemäßen Mittel können in den üblichen, dem Fachmann geläufigen Zubereitungen, z.B. als benetzbare Pulver, Stäubemittel, Granulate, Dispersionskonzentrate, emulgierbare Konzentrate oder versprühbare Lösungen, in den Handel gebracht werden. Die formulierten Mittel enthalten dabei die Wirkstoffe im allgemeinen in Konzentrationen von 2 bis 95 Gew.-%.

Benetzbare Pulver sind in Wasser gleichmäßig dispergierbare Präparate, die neben den Wirkstoffen außer einem Verdünnungsoder Inertstoff noch Netzmittel, z.B. polyoxethylierte Alkylphenole, polyoxethylierte Oleyl- oder Stearylamine, Alkyloder Alkylphenyl-sulfonate und Dispergiermittel, z.B. ligninsulfonsaures Natrium, dinaphthylmethandisulfonsaures Natrium oder auch oleylmethyltaurinsaures Natrium enthalten.

Emulgierbare Konzentrate werden durch Auflösen des Wirkstoffgemisches in einem organischen Lösungsmittel, z.B. Butanol, Cyclohexanon, Dimethylformamid, Xylol oder auch höhersiedenden Aromaten und Zusatz eines nichtionischen Netzmittels, beispielweise eines polyoxäthylierten Alkylphenols oder eines polyoxäthylierten Oleyl- oder Stearylamins, erhalten.

In benetzbaren Pulvern variiert die Gesamt-Wirkstoffkonzentration zwischen etwa 10 % und 95 %, der Rest besteht aus den oben angegebenen Formulierungszusätzen. Bei emulgierbaren Konzentraten beträgt

die Wirkstoffkonzentration etwa 10 % bis 80 %. Staubförmige Formulierungen enthalten meistens 5 % bis 20 % an Wirkstoffen, versprühbare Lösungen etwa 2 % bis 20 %. Bei Granulaten hängt der Wirkstoffgehalt zum Teil davon ab, in welcher Form (flüssig oder fest) die Wirkstoffe vorliegen und welche Granulierhilfsmittel, Füllstoffe usw. verwendet werden.

Zur Anwendung werden die handelsüblichen Konzentrate Gegebenenfalls in üblicher Weise verdünnt, z.B. bei benetzbaren Pulvern und emulgierbaren Konzentration mittels Wasser.

Staubförmige und granulierte Zubereitungen sowie versprühbare Lösungen werden vor der Anwendung nicht mehr mit weiteren inerten Stoffen verdünnt.

A. Formulierungsbeispiele

(a) Ein Stäubemittel wird erhalten, indem man 10 Gewichtsteile Wirkstoffgemisch und 90 Gewichtsteile Talkum als Inertstoff mischt und in einer Schlagmühle zerkleinert.

(b) Ein in Wasser leicht dispergierbares, benetzbares Pulver wird erhalten, indem man 25 Gewichtsteile Wirkstoffgemisch, 64 Gewichtsteile kaolinhaltigen Quarz als Inertstoff, 10 Gewichtsteile ligninsulfonsaures Kalium und 1 Gewichtsteile oleoylmethyltaurinsaures Natrium als Netz- und Dispergiermittel mischt und in einer Stiftmühle mahlt.

(c) Ein in Wasser leicht dispergierbares Dispersionskonzentrat wird erhalten, indem man 20 Gewichtsteile Wirkstoffgemisch mit 6 Gewichtsteilen Alkylphenolpolyglykolether (®Triton X 207), 3 Gewichtsteilen Isotridecanolpolyglykolether (8 AeO) und 71 Gewichtsteilen paraffinischem Mineralöl (Siedebereich z.B ca. 255 bis über 377 ° C) mischt und in einer Reibkugelmühle auf eine Feinheit von unter 5 Mikron vermahlt.

(d) Ein emulgierbares Konzentrat wird erhalten aus 15 Gewichtsteilen Wirkstoffgemisch, 75 Gewichtsteilen Cyclohexanon als Lösungsmittel und 10 Gewichtsteilen oxethyliertem Nonylphenol ((10 AeO) als Emulgator.

B. Biologische Beispiele:

Der Nachweis des Synergismus in den nachfolgenden Beispielen ergibt sich aus dem Vergleich des aus den Wirkungen der Einzelkomponenten errechneten additiven Wirkungsgrads mit dem experimentell gefundenen Wirkungsgrad der Wirkstoffkombinationen. Die Errechnung des additiven Wirkungsgrades erfolgt nach der Formel von S.R. Colby (vgl. Calculating synergistic and antagonistic responses of herbicide combinations, Weeds, 15,1967, S. 20 bis 22).

Diese Formel lautet:

$$E = X + Y - \frac{X \cdot Y}{100}$$

wobei

X = % Schädigung durch Herbizid A bei x kg/ha Aufwandmenge,

X = % Schädigung durch Herbizid B bei y kg/ha Aufwandmenge,

E = % die erwartete Schädigung der Herbizide A + B bei x + y kg/ha Aufwandmenge bedeuten.

Ist die tatsächliche Schädigung größer als berechnet, so ist die Wirkung der Wirkstoffkombination mehr als additiv, d.h., es liegt ein synergistischer Effekt vor.

Beispiel 1

Samen verschiedener Ungräser und Unkräuter wurden in sandiger Lehmerde in Plastiktöpfen (Ø 9 cm) ausgesät und unter guten Wachstumsbedingungen im Gewächshaus 3 - 4 Wochen angezogen. Anschließend wurden die als wäßrige Lösungen, als wasserdispergierbare Pulver oder als Emulsionskonzentrate formulierten Verbindungen der Formel I und die Kombinationspartner alleine sowie in Kombination in Form von versprühbaren Lösungen auf die oberirdischen Pflanzenteile gesprüht. Die verwendete Wassermenge entsprach dabei 400 l/ha.

Nach ca. 3 Wochen Standzeit im Gewächshaus unter optimalen Wachstumsbedingungen wurde die herbizide Wirkung visuell bonitiert. Die Ergebnisse sind in der nachfolgenden Tabelle 1 wiedergegeben.

Tabelle 1:

Herbizide Wirkung der erfindungsgemäßen Mischungen unter Gewächshausbedinungen (gemäß Beispiel 1)

| Produkt | Dosierung kg a.i./ha | % Wirkung ECG | PMI |
|---|---|---|---|
| Ia | 0,125 | 10 | 65 |
| | 0,060 | 0 | 30 |
| IIu | 0,008 | 30 | 55 |
| Ia + IIu | 0,125 + 0,008 | 90 (37) | 95 (84) |
| | 0,060 + 0,008 | 75 (30) | 80 (68) |

Abkürzungen:

ECG = Echinochloa crus-galli
PMI = Panicum miliaceum
a.i.= Aktivsubstanz
Ia = Glufosinate
IIa = Sulfometuron-methyl
( )= Erwartungswert nach Colby

Die Ergebnisse zeigen, daß mit der Wirkstoffkombination eine unerwartet hohe herbizide Wirksamkeit erreicht wurde, die wesentlich besser ist, als auf Grund der Summe der Einzelwirkung der Wirkstoffe erwartet werden konnte.

Beispiel 2

Unter Feldbedingungen wurde ein Bestand aus verschiedenen annuellen und perennierenden Unkräutern mit einer Wuchshöhe von 5 bis 15 cm in Parzellen von 8 $m^2$ unterteilt.

Diese Parzellen wurden dann mit den erfindungsgemäßen Mischungen sowie mit den diese Mischungen bildenden Einzelkomponenten alleine in unterschiedlichen Aufwandmengen im Nachauflaufverfahren behandelt. Die applizierte Wassermenge betrug dabei 400 1/ha. Nach Ablauf von 30 Tagen erfolgte die optische Bonitur der Pflanzenschädigungen im Vergleich zu unbehandelten Versuchsgliedern.

In Tabelle 2 sind die Wirksamkeiten der Mischungen sowie der Einzelkomponenten gegen die verschiedenen Unkräuter zusammengestellt.

Die dargestellten Versuchsergebnisse belegen klar die synergistischen Wirkungen der erfindungsgemäßen Mischungen im Vergleich zu den Wirksamkeiten der Einzelkomponenten. Besonders deutlich ist dieser Synergismus an den schwerbekämpfbaren, perennierenden Unkräutern wie z.B. Agropyron oder Cirsium zu erkennen.

**Tabelle 2:**

| Produkt | Dosierung kg a.i./ha | % Wirkung AGR | SIA | CAR |
|---|---|---|---|---|
| Ia | 0,5 | 0 | 0 | 40 |
| | 1,0 | 27 | 55 | 55 |
| IIu | 0,0125 | 23 | 70 | 0 |
| Ia + IIu | 0,5 + 0,0125 | 63 (23) | 80 (70) | 65 (40) |
| | 1,0 + 0,0125 | 68 (43) | 92 (86) | 85 (55) |

**Abkürkungen:**

AGR = Agropyron repens
SIA = Sinapis arvensis
CAR = Cirsium arvense
a.i.= Aktivsubstanz

Beispiel 3

Analog zu Beispiel 1 wurden Pflanzen von Commelina communis und Amaranthus retroflexus in Töpfen (Ø 10 cm) gezogen und bei einer Wuchshöhe von ca. 25 cm mit den erfindungsmäßen Mischungen und den Einzelkomponenten alleine mit einer Wasseraufwandmenge von 1000 1/ha behandelt.

Die Auswertung mittels optischer Bonitur erfolgte nach Ablauf von ca. 3 Wochen.

Die Ergebnisse dieser Versuche sind in Tabelle 3 zusammengestellt. Wie die dargestellten Daten klar ergeben, zeigen die Mischungen aus Glufosinate-Ammonium und verschiedenen Sulfonylharnstoffderivaten deutliche synergistische Wirkungen, denn in allen Fällen liegen die Wirkungsgrade der Mischungen erheblich über den nach Colby für additive Effekte berechneten Werten.

Tabelle 3:

| Produkt | Dosierung kg a.i./ha | % Wirkung COMCO | % Wirkung AMARE |
|---|---|---|---|
| Ia | 0,4 | 40 | 5 |
| IIu | 0,1 | 0 | 5 |
| | 0,05 | 0 | 5 |
| | 0,1 | 0 | 5 |
| | 0,5 | 0 | 10 |
| IIy | 0,01 | 0 | 5 |
| IIm | 0,01 | - | 12 |
| | 0,05 | - | 10 |
| | 0,1 | - | 10 |
| | 0,5 | - | 10 |
| IIw | 0,01 | - | 5 |
| | 0,05 | - | 5 |
| | 0,1 | - | 5 |
| | 0,5 | - | 5 |
| Ia + IIu | 0,4 + 0,01 | - | 86 (10) |
| | 0,4 + 0,05 | 73 (40) | 92 (10) |
| | 0,4 + 0,1 | 63 (40) | 99 (10) |
| | 0,4 + 0,5 | 90 (40) | 99 (15) |
| Ia + IIy | 0,4 + 0,01 | 60 (40) | 95 (10) |
| Ia + IIm | 0,4 + 0,01 | - | 85 (16) |
| | 0,4 + 0,05 | - | 83 (15) |
| | 0,4 + 0,1 | - | 88 (15) |
| | 0,4 + 0,5 | - | 88 (15) |
| Ia + IIw | 0,4 + 0,01 | - | 80 (10) |
| | 0,4 + 0,05 | - | 80 (10) |
| | 0,4 + 0,1 | - | 80 (10) |
| | 0,4 + 0,5 | - | 85 (10) |

Abkürzungen:

COMCO = Commelina communis
AMARE = Amaranthus retroflexus

a.i. = Aktivsubstanz
( ) = Erwartungswerte nach Colby
Ia = Glufosinate-ammonium
IIm = Thiameturon-methyl
IIu = Sulfometuron-methyl
IIw = Metsulfuron-methyl
IIy = Chlorsulfuron

**Ansprüche**

1. Herbizide Mittel, dadurch gekennzeichnet, daß sie einen Wirkstoff der Formel I,

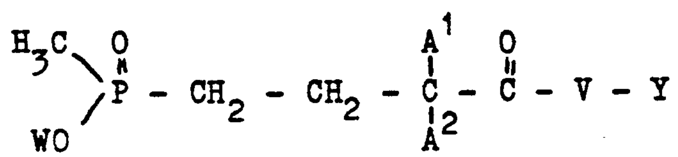 (I)

worin
$A^1$ = H und $A^2$ = $NH_2$ oder $A^1$, $A^2$ zusammen ein Sauerstoffatom
V = O oder NH,
Y = im Falle V = O Wasserstoff oder $(C_1\text{-}C_4)$Alkyl oder
Y = im Falle V = NH einen Rest der Formeln $-CH(CH_3)-CONH-CH(CH_3)-COOH$ oder $-CH(CH_3)-CONH-CH[CH_2CH(CH_3)_2]-COOH$ bedeutet, und unabhängig von der Bedeutung von V,
W = Wasserstoff bedeutet,
oder dessen Salz,
in Kombination mit einer Verbindung der Formel II,

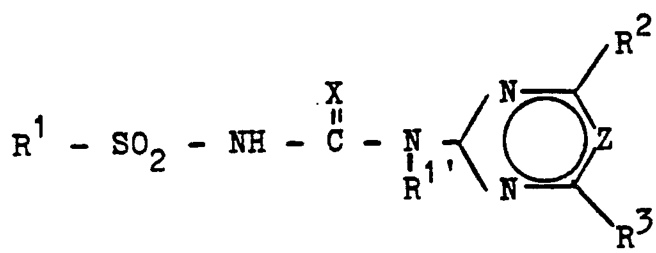 (II)

worin
$R^1$ = $(C_1\text{-}C_4)$ Alkyl, $(C_2\text{-}C_6)$ Alkenyl, $(C_2\text{-}C_6)$ Alkinyl, die halogeniert sein können, $(C_1\text{-}C_4)$ Alkylamino, Di$(C_1\text{-}C_4$-alkyl)amino, [N-$(C_1\text{-}C_4$-Alkylsulfonyl)-N-$(C_1\text{-}C_4$-alkyl)]amino, wobei die Alkylreste halogeniert sein können,
Phenyl, Benzyl, Phenoxy oder Thienyl, die alle durch $(C_1\text{-}C_4)$ Alkyl, $(C_2\text{-}C_6)$Alkenyl, $(C_2\text{-}C_6)$Alkinyl oder $(C_1\text{-}C_4)$Alkoxy, die alle durch Halogen oder $(C_1\text{-}C_4$-Alkoxy)carbonyl substituiert sein können, ferner durch Halogen, $CF_3$, Nitro, einen Rest der Formel $-COOR^4$, worin
$R^4$ = H, $(C_1\text{-}C_6)$Alkyl, $(C_2\text{-}C_6)$Alkenyl, $(C_2\text{-}C_6)$Alkinyl, $(C_1\text{-}C_4)$-Alkoxy-$(C_1\text{-}C_4)$alkyl oder Halogen $(C_1\text{-}C_4)$ alkyl bedeutet,
ferner durch einen Rest der Formel $-S(O)_nR^5$, worin
$R^5$ = $(C_1\text{-}C_4)$Alkyl, $(C_1\text{-}C_4)$Alkoxy, Halogen-$(C_1\text{-}C_4)$alkyl, $(C_1\text{-}C_4)$ Alkoxy$(C_1\text{-}C_4)$alkyl,

($C_1$-$C_4$) Alkoxy-carbonyl($C_1$-$C_4$)alkyl, Di($C_1$-$C_4$-alkyl)-amino, ($C_1$-$C_4$) Alkylamino, ($C_1$-$C_4$)Alkoxy-($C_1$-$C_4$)alkylamino und n = 0,1 oder 2 bedeutet, substituiert sein können, oder Pyrazolyl, das durch ($C_1$-$C_4$)Alkyl, ($C_2$-$C_6$)Alkoxyl, ($C_2$-$C_6$) Alkinyl oder ($C_1$-$C_4$)Alkoxy, die alle durch Halogen oder ($C_1$-$C_4$-Alkoxy)carbonyl substituiert sein können, ferner durch Halogen, $CF_3$, Nitro, einen Rest der Formel $-S(O)_nR^5$, worin $R^5$ die genannte Bedeutung hat, substituiert sein kann,

$R^{1'}$ = H, ($C_1$-$C_4$)Alkyl oder ($C_2$-$C_4$)Alkenyl,

$R^2$, $R^3$ = unabhängig von einander ($C_1$-$C_4$)Alkyl, ($C_1$-$C_4$)Alkoxy, die beide gegebenenfalls ein- oder mehrfach durch Halogen, ($C_1$-$C_4$)Alkoxy, ($C_1$-$C_4$-Alkoxy)carbonyl substituiert sind, ($C_2$-$C_6$)Alkenyl, ($C_2$-$C_6$)Alkinyl, ($C_2$-$C_6$)Alkenyloxy, ($C_2$-$C_6$)Alkinyloxy oder Halogen.

X = O, S oder $NR^6$ mit $R^6$ = ($C_1$-$C_4$)Alkyl oder ($C_1$-$C_4$)Alkoxy und

Z = CH oder N bedeuten, oder deren Salz, enthalten.

**2.** Herbizide Mittel gemäß Anspruch 1, die einen Wirkstoff der Formel I, worin $A^1$ = H, $A^2$ = $NH_2$ bedeuten und V, Y, W die Bedeutungen von Anspruch 1 besitzen, oder dessen Salz in Kombination mit einer Verbindung der Formel II enthalten, wobei in Formel II $R^1$ = ($C_1$-$C_4$) Alkoxycarbonyl-thienyl, ($C_1$-$C_4$) Alkoxycarbonylphenyl oder Chlorphenyl, $R^{1'}$ = H oder $CH_3$, $R^2$, $R^3$ = ($C_1$-$C_4$) Alkyl oder ($C_1$-$C_4$) Alkoxy, X = O und Z = N oder CH bedeuten.

**3.** Herbizide Mittel gemäß Ansprüchen 1 oder 2, die eine Verbindung der Formel I, worin $A^1$ = H, $A^2$ = $NH_2$, V-Y = OH und W = H bedeuten oder deren Salz; in Kombination mit einer Verbindung der Formel II enthalten, worin $R^1$ = 2-Methoxycarbonyl-3-thienyl, 2-Methoxycarbonylphenyl oder 2-Chlorphenyl; $R^{1'}$ = H; $R^2$, $R^3$ = $OCH_3$ oder $CH_3$, X = O und Z = N oder CH bedeuten.

**4.** Herbizide Mittel gemäß Ansprüchen 1 bis 3, dadurch gekennzeichnet, daß das Mischungsverhältnis der Verbindungen der Formel I zu den Verbindungen der Formel II im Bereich zwischen 500 : 1 bis 1 : 10 variiert.

**5.** Herbizide Mittel gemäß Ansprüchen 1 bis 4, dadurch gekennzeichnet, daß das Mischungsverhältnis der Verbindung der Formel I zu den Verbindungen der Formel II im Bereich zwischen 100 : 1 und 1 : 5 variiert.

**6.** Verfahren zur Bekämpfung von Schadpflanzen, dadurch gekennzeichnet, daß man auf diese oder die Anbaufläche ein herbizides Mittel gemäß Ansprüchen 1 bis 5 in einer wirksamen Menge appliziert.

**7.** Verwendung von herbiziden Mitteln gemäß Ansprüchen 1 bis 5 zur Bekämpfung von Schadpflanzen.

## Claims

**1.** Herbicidal agents which contain an active ingredient of the formula I

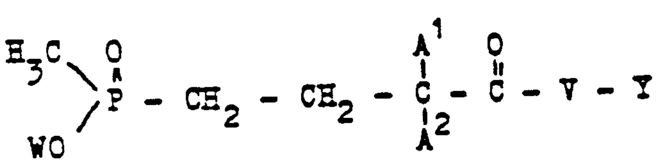

(I)

in which

$A^1$ denotes H and $A^2$ denotes $NH_2$, or $A^1$ and $A^2$ together denote an oxygen atom,

V denotes O or NH,

Y, where V = O, denotes hydrogen or ($C_1$,-$C_4$)alkyl, or

Y, where V = NH, denotes a radical of the formula $-CH(CH_3)-CONH-CH(CH_3)-COOH$ or $-CH(CH_3)-CONH-CH[CH_2CH(CH_3)_2]-COOH$, and, irrespective of the meaning of V,

W denotes hydrogen, or a salt thereof,
in combination with a compound of the formula II

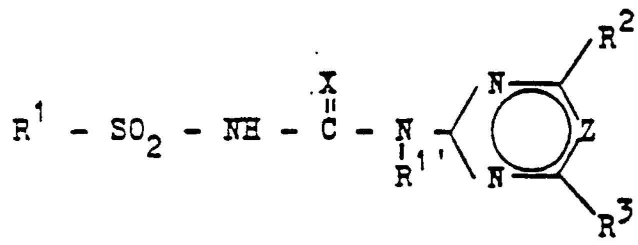

(II)

in which

$R^1$

denotes $(C_1-C_4)$alkyl,$(C_2-C_6)$alkenyl, $(C_2-C_6)$alkynyl, which may in each case be halogenated, $(C_1-C_4)$-alkylamino, di$(C_1-C_4$-alkyl)-amino, [N-$(C_1-C_4$-alkylsulfonyl)-N-$(C_1-C_4$-alkyl)]-amino.where the alkyl radicals may be halogenated, phenyl, benzyl, phenoxy or thienyl which may all be substituted by $(C_1-C_4)$-alkyl,$(C_2-C_6)$alkenyl, $(C_2-C_6)$alkynyl or $(C_1-C_4)$alkoxy which may all be substituted by halogen or $(C_1-C_4$-alkoxy)carbonyl, furthermore by halogen, $CF_3$, nitro or a radical of the formula $-COOR^4$, in which

$R^4$ denotes H, $(C_1-C_4)$alkyl, $(C_2-C_6)$alkenyl, $(C_2-C_6)$alkynyl, $(C_1-C_4)$alkoxy-$(C_1-C_4)$alkyl, or halo-$(C_1-C_4)$alkyl, furthermore by a radical of the formula $-S(O)_nR^5$, in which

$R^5$ denotes $(C_1-C_4)$alkyl, $(C_1-C_4)$alkoxy, halo$(C_1-C_4)$alkyl, $(C_1-C_4)$alkoxy-$(C_1-C_4)$alkyl, $(C_1-C_4)$-alkoxy-carbonyl-$(C_1-C_4)$alkyl, di$(C_1-C_4$-alkyl)-amino, $(C_1-C_4)$alkylamino, $(C_1-C_4)$alkoxy-$(C_1-C_4)$-alkylamino, and n denotes 0,1 or 2, or

pyrazolyl, which may be substituted by $(C_1-C_4)$alkyl, $(C_2-C_6)$alkoxy, $(C_2-C_6)$alkynyl or $(C_1-C_4)$alkoxy, which may all be substituted by halogen or $(C_1-C_4$-alkoxy)carbonyl, furthermore by
halogen, $CF_3$, nitro, or a radical of the formula $-S(O)_nR^5$, in which $R^5$ has the meaning mentioned,

$R^1$

denotes H, $(C_1-C_4)$alkyl or $(C_2-C_4)$alkenyl,

$R^2$ and $R^3$, independently of one another,

denote $(C_1-C_4)$alkyl or $(C_1-C_4)$alkoxy which are both optionally monosubstituted or polysubstituted by halogen, $(C_1-C_4)$alkoxy or $(C_1-C_4$-alkoxy)carbonyl, $(C_2-C_6)$alkenyl, $(C_2-C_5)$alkynyl, $(C_2-C_6)$alkenyloxy, $(C_2-C_6)$alkynyloxy or halogen,

X

denotes O,S or $NR^6$, where $R^6$ = $(C_1-C_4)$alkyl or $(C_1-C_4)$alkoxy, and

Z

denotes CH or N, or a salt thereof.

2. Herbicidal agents as claimed in claim 1, which contain an active ingredient of the formula I, in which $A^1$ denotes H, $A^2$ denotes $NH_2$ and V, Y and W have the meanings defined in claim 1, or the salts thereof, in combination with a compound of the formula II, where in the formula II,
$R^1$ denotes $(C_1-C_4)$alkoxycarbonyl-thienyl, $(C_1-C_4)$alkoxycarbonylphenyl or chlorophenyl, $R^1$ denotes H, or $CH_3$, $R^2$ and $R^3$ denote $(C_1-C_4)$alkyl or $(C_1-C_4)$alkoxy, X denotes O and Z denotes N or CH.

3. Herbicidal agents as claimed in claim 1 or 2, which contain a compound of the formula I in which $A^1$ denotes H, $A^2$ denotes $NH_2$, V-Y denotes OH and W denotes H, or the salts thereof; in combination with a compound of the formula II in which $R^1$ denotes 2-methoxycarbonyl-3-thienyl, 2-methoxycarbonyl-phenyl or 2-chlorophenyl; $R^1$ denotes H; $R^2$ and $R^3$ denotes $OCH_3$, X denotes O and Z denotes N or CH.

4. Herbicidal agents as claimed in claims 1 to 3, characterized in that the ratio of the compounds of the formula I to the compounds of the formula II varies in the range between 500 : 1 to 1 : 10.

5. Herbicidal agents as claimed in claims 1 to 4, characterized in that the ratio of the compounds of the formula I to the compounds of the formula II varies in the range between 100 : 1 and 1 : 5.

6. A method for controlling harmful plants, characterized in that a herbicidal agent as claimed in claims 1

to 5, is applied to these plants or to the cultivated area in an effective amount.

7. The use of herbicidal agents as claimed in claims 1 to 5 for controlling harmful plants.

## Revendications

1. Produits herbicides caractérisés en ce qu'ils contiennent une matière active de formule I ci-dessous,

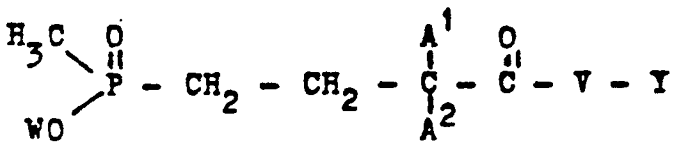

(I)

(dans laquelle
$A^1$ = H et $A^2$ = $NH_2$ ou bien $A^1$ et $A^2$ représentent ensemble un atome d'oxygène,
V = O ou NH,
Y, si V = O, désigne l'hydrogène ou un alkyle en $C_1$-$C_4$, ou bien, si V = NH, un radical $-CH(CH_3)-CONH-CH(CH_3)-COOH$ ou $-CH(CH_3)-CONH-CH[CH_2CH(CH_3)_2]-COOH$, et indépendemment de la signification de V,
W désigne l' hydrogène),
ou un sel de cette matière active,
avec un composé de formule II,

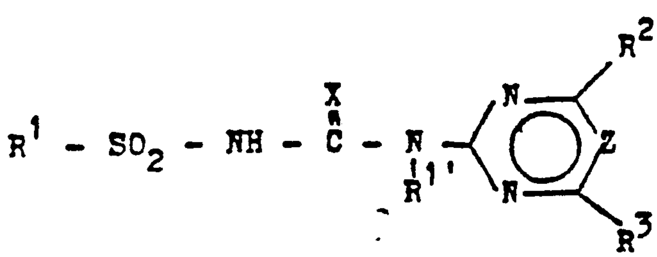

(II)

(dans laquelle
$R^1$ désigne un alkyle en $C_1$-$C_4$ ou bien un alcényle ou un alcynyle en $C_2$-$C_6$ pouvant être tous halogénés, un ($C_1$-$C_4$) alkylamino, un di ($C_1$-$C_4$-alkyl) amino ou un [N-$C_1$-$C_4$-alkylsulfonyl)-N-($C_1$-$C_4$-alkyl)] amino dont les alkyles peuvent être halogénés,
un groupe phényle, benzyle, phénoxy ou thiényle pouvant tous avoir comme substituants un alkyle en $C_1$-$C_4$, un alcényle ou un alcynyle en $C_2$-$C_6$ ou un alcoxy en $C_1$-$C_4$ qui peuvent tous être substitués par un halogène ou un groupe ($C_1$-$C_4$-alcoxy)carbonyle, ou encore pouvant avoir comme substituants un halogène, un groupe $CF_3$ ou nitro ou un radical $-COOR^4$,
$R^4$ désignant l' hydrogène, un alkyle en $C_1$-$C_4$, un alcényle ou un alcynyle en $C_2$-$C_6$, un ($C_1$-$C_4$)-alcoxy-($C_1$-$C_4$)-alkyle ou un halogéno($C_1$-$C_4$)alkyle,
ou encore un radical $-S(O)nR^5$,
$R^5$ étant un alkyle ou un alcoxy en $C_1$-$C_4$, un halogéno-($C_1$ -$C_4$)-alkyle, un ($C_1$-$C_4$) alcoxy($C_1$-$C_4$)alkyle, un ($C_1$-$C_4$) alcoxy-carbonyl($C_1$-$C_4$)alkyle, un di ($C_1$-$C_4$-alkyl)-amino, un ($C_1$-$C_4$) alkylamino ou un ($C_1$-$C_4$)alcoxy-($C_1$,$C_4$) alkylamino, et n le nombre 0, 1 ou 2,
ou encore
un groupe pyrazolyle pouvant porter comme substituant un alkyle en ($C_1$-$C_4$), un alcoxy en ($C_2$-$C_6$), un alcynyle en ($C_2$-$C_6$) ou un alcoxy en ($C_1$-$C_4$) qui peuvent tous être substitués par un halogène ou par un groupe ($C_1$-$C_4$ -alcoxy)carbonyle, ou pouvant avoir encore comme substituant un halogène, un groupe $CF_3$ ou nitro ou un radical $-S(O)nR^5$, $R^5$ ayant la signification ci-dessus,
$R^{1'}$ désigne l'hydrogène, un alkyle en ($C_1$-$C_4$) ou un alcényle en ($C_2$-$C_4$),

$R^2$ et $R^3$ sont chacun, indépendamment l'un de l'autre, un alkyle ou un alcoxy en ($C_1$-$C_4$), tous deux éventuellement substitués par un ou plusieurs halogènes, alcoxys en ($C_1$-$C_4$) ou ($C_1$-$C_4$-alcoxy)carbonyles, ou bien un alcényle ou un alcynyle en ($C_2$-$C_6$), un ($C_2$-$C_6$)alcényloxy, ou un ($C_2$-$C_6$)alcynyloxy ou un halogène,

X représente l'oxygène ou le souffre ou un groupe $NR^6$, $R^6$ étant une alkyle ou un alcoxy en ($C_1$-$C_4$),

Z représente CH ou N), ou avec un sel d'un tel composé de formule II.

**2.** Produits herbicides selon la revendication 1 qui contiennent un matière active de formule I dans laquelle

$A^1$ est l'hydrogène, $A^2$ le groupe $NH_2$ et V, Y et W ont les significations données à la renvendication 1, ou un seul de cette matière, avec un composé de formule II dans lequel

$R^1$ est un groupe ($C_1$-$C_4$) alcoxycarbonyl-thiényle, ($C_1$-$C_4$) alcoxycarbonylphényle ou chlorophényle, $R^{1'}$ est l'hydrogène ou le groupe $CH_3$, $R^2$ et $R^3$ sont des alkyles ou des alcoxys en ($C_1$-$C_4$), X est l'oxygène et Z l'azote ou le groupe CH.

**3.** Produits herbicides selon la revendication 1 ou 2 qui contiennent un composé de formule I dans lequel $A^1$ est l'hydrogène, $A^2$ le groupe $NH_2$, V-Y sont le groupe OH et W l'hydrogène, ou un sel de ce composé, avec un composé de forumule II dans lequel $R^1$ est un groupe 2-méthoxycarbonyl-3-thiényle, 2-méthoxycarbonyl-phényle ou 2-chlorophényle, $R^{1'}$ l'hydrogène, $R^2$ et $R^3$ sont chacun le groupe $OCH_3$ ou $CH_3$, X est l'oxygène et Z l'azote ou le groupe CH.

**4.** Produits herbicides selon les revendications 1 à 3, caractérisés en ce que le rapport du composé de formule I à celui de formule II est compris entre 500:1 et 1:10.

**5.** Produits herbicides selon les revendications 1 à 4, caractérisés en ce que le rapport du composé de formule I à celui de formule II est compris entre 100:1 et 1:5.

**6.** Procédé de lutte contre des plantes nuisibles, procédé caractérisé en ce que l' on applique sur ces plantes ou sur les sols où elles poussent un produit herbicide selon les revendication 1 à 5, à un taux approprié.

**7.** L'emploi des produits herbicides selon les revendications 1 à 5 pour lutter contre des plantes nuisibles.